# EUROPEAN PATENT SPECIFICATION

(11) **EP 3 290 685 B1**
(45) Date of publication and mention of the grant of the patent: **24.04.2024**
(21) Application number: 15890726.1
(22) Date of filing: 28.04.2015
(51) Int. Cl.: F02N 11/04, F02N 11/08, B60R 16/02, H02P 9/08, H01H 85/00, H02J 7/00, F02N 3/04

(54) **POWER SUPPLY SYSTEM FOR VEHICLES AND CONTROL METHOD FOR VEHICLE POWER SUPPLY SYSTEM**
STROMVERSORGUNGSSYSTEM FÜR FAHRZEUGE UND STEUERUNGSVERFAHREN FÜR EIN STROMVERSORGUNGSSYSTEM FÜR FAHRZEUGE
SYSTÈME D'ALIMENTATION ÉLECTRIQUE POUR VÉHICULES ET PROCÉDÉ DE COMMANDE DE SYSTÈME D'ALIMENTATION ÉLECTRIQUE POUR VÉHICULE

(43) Date of publication of application: 07.03.2018
(73) Proprietor: Shindengen Electric Manufacturing Co., Ltd., Tokyo 100-0004 (JP)
(72) Inventor: ARAI Tatsuya, Hanno-shi Saitama 357-8585 (JP)
(74) Representative: AWA Sweden AB
(86) International application number: PCT/JP2015/062847
(87) International publication number: WO 2016/174742

(56) References cited:
- EP-A1- 2 803 852
- WO-A1-2013/105238
- JP-A- 2000 125 482
- JP-A- 2002 098 032
- JP-A- 2002 098 032
- JP-B1- 2 872 210

## Description

### [Technical Field]

The present invention relates to a vehicular power supply system and a control method for a vehicular power supply system.

### [Background Art]

In the related art, proposed is, for example, a vehicular power supply system that starts an engine of a motorcycle or the like or charges a battery (refer to Japanese Patent No. 5283784, for example).

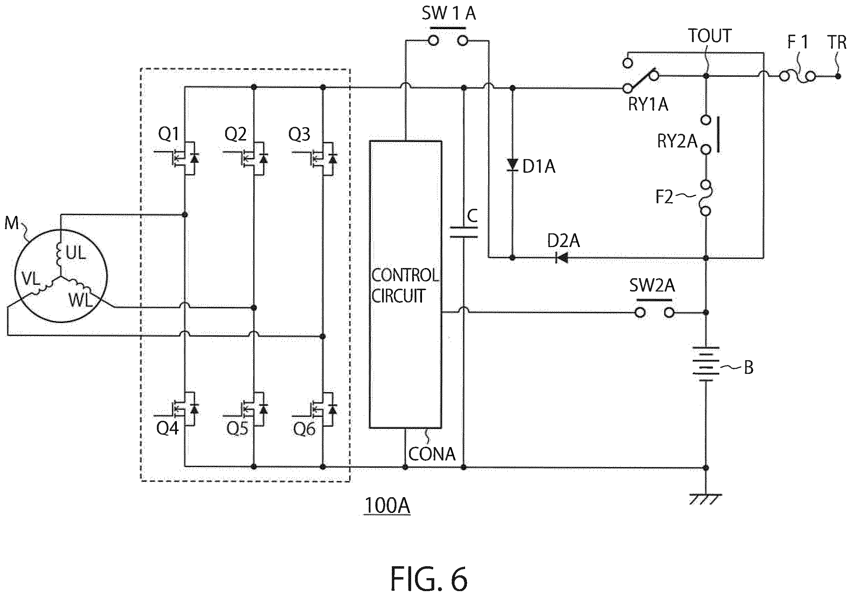

This vehicular power supply system in the related art includes, for example: a battery B connected to an engine of a vehicle; two relay circuits RY1A and RY2A, two fuses F1 and F2; and a power conversion unit including three-phase bridge circuits Q1 to Q6; a control circuit CONA adapted to control this power conversion unit and the relay circuits RY1A and RY2A; a main switch SW1A and a starter switch SW2A controlled by a user; two diode elements D1A and D2A adapted to prevent power generated from a motor from being consumed by the battery during kick drive whereby an engine is started by kicking of the user; and a smoothing capacitor C (FIG. 6).

Known systems are disclosed in EP2803852A1 and JP2002098032A.

### Summary of Invention

### Technical Problem

In a vehicular power supply system described above, control is individually performed by using two relay circuits RY1A and RY2A such that generated power is not absorbed by a deteriorated battery in order to ensure starting performance during kick drive.

Such control using the relay circuits RY1A and RY2A is complex. Additionally, due to contact bounce of the relay circuit RY1A, a motor is controlled before surely switching the relay circuit RY1A, and a fuse may be erroneously blown.

Furthermore, when the motor is controlled after the relay circuit RY1A is surely turned on considering the contact bounce, engine start may be delayed.

Additionally, diode elements D1 and D2 are needed as described above, and the number of components is increased.

Therefore, the present invention is directed to providing a vehicular power supply system in which the number of diode elements and relay circuits can be reduced.

### Solution to Problem

A solution to the above mentioned problem is provided by the vehicular power supply system according to claim 1 and the corresponding control method of the vehicular power supply system of claim 1 according to claim 12. Further aspects of the invention are described in the dependent claims.

In the vehicular power supply system, wherein the control circuit is configured to:
determine whether the main switch is turned on;
turn off the first and second control transistors in the case of determining that the main switch is turned on;
determine whether the starter switch is turned on after turning off the first and second control transistors;
turn on the relay circuit in the case where the starter switch is turned on;
control the three-phase bridge circuit to perform motor driving for the motor after turning on the relay circuit;
determine whether the engine connected to the motor has been started after performing motor driving for the motor;
stop the motor driving performed by the three-phase bridge circuit in the case of determining that the engine has been started;
control the three-phase bridge circuit to perform phase control for AC power supplied from the motor after stopping the motor driving, and output DC power from between one end and the other end of the three-phase bridge circuit;
determine whether charging voltage at the battery is preset target voltage or more in a first state in which the engine is driven and phase control is performed in the three-phase bridge circuit; and
turn off the relay circuit in the case where the charging voltage at the battery is the preset target voltage or more, control the three-phase bridge circuit to perform phase control for AC power supplied from the motor, and output DC power from between the one end and the other end of the three-phase bridge circuit, and further turn on the first and second control transistors.

In the vehicular power supply system, wherein in the case where the charging voltage at the battery is less than the target voltage in the first state, the control circuit controls the three-phase bridge circuit to perform phase control for AC power supplied from the motor, and outputs DC power from between the one end and the other end of the three-phase bridge circuit while keeping the relay circuit turned on and the first and second control transistors turned off.

### Advantageous Effects of Invention

The vehicular power supply system according to one aspect of the present invention includes: the motor connected to the engine of the vehicle; the main switch controlled to be turned on or off; the starter switch controlled to be turned on or off and used to start the engine; the battery having the positive electrode connected to the one end of the starter switch and the negative electrode connected to the grounding wire; the battery fuse having the one end connected to the positive electrode of the battery; the relay circuit adapted to electrically connect the first contact connected to the output terminal to the second contact connected to the positive electrode of the battery when turned on, and on the other hand, adapted to interrupt electrical connection between the first contact and the second contact when turned off; the smoothing capacitor having the one end connected to the first contact and the other end connected to the negative electrode of the battery; the three-phase bridge circuit having the one end connected to the first contact and the other end connected to the grounding wire, and adapted to perform motor driving for the motor by performing phase control for AC power supplied from the motor and outputting DC power from between the one end and the other end or by converting DC power of the battery to AC power and supplying the AC power to the motor; the first control transistor having the one end connected to the one end of the three-phase bridge circuit and the other end connected to the one end of the main switch; the first control parasitic diode having the anode connected to the one end of the first control transistor and the cathode connected to the other end of the first control transistor; the second control transistor having the one end connected to the other end of battery fuse and the other end connected to the one end of the main switch; the second control parasitic diode having the anode connected to the one end of the second control transistor and the cathode connected to the other end of the second control transistor; and the control circuit connected between the other end of the main switch and the grounding wire, supplied with power supplied to the other end of the main switch, and adapted to control the three-phase bridge circuit, relay circuit, and first and second control transistors.

As described above, in the vehicular power supply system according to one aspect the present invention, power is supplied to the control circuit via the first and second control parasitic diodes of the first and second control transistors when the main switch is turned on, and also power generated from the motor can be prevented from being consumed by the battery during kick drive.

Consequently, there is no need to separately arrange a diode element in order to prevent the power generated from the motor from being consumed by the battery during the kick drive.

Furthermore, in the vehicular power supply system according to one aspect of the present invention, a current path can be controlled such that current flows to the battery fuse under the control of one relay circuit and the first and second control transistors.

Moreover, in the vehicular power supply system according to another aspect of the present invention, overcurrent can be suppressed by controlling the first and second control MOS transistors based on a detection value of current flowing between the one end of the three-phase bridge circuit and the positive electrode of the battery. In other words, the battery fuse and the relay circuit can be omitted.

Thus, according to the vehicular power supply system of the present invention, the number of diode elements and relay circuits can be reduced.

### Brief Description of Drawings

[FIG. 1] FIG. 1 is a diagram illustrating an exemplary configuration of a vehicular power supply system 100 according to a first embodiment that is one aspect of the present invention.
[FIG. 2] FIG. 2 is a flowchart illustrating an exemplary operation of the vehicular power supply system 100 illustrated in FIG. 1.
[FIG. 3] FIG. 3 is a diagram illustrating an exemplary configuration of a vehicular power supply system 200 according to the second embodiment that is one aspect of the present invention.
[FIG. 4] FIG. 4 is a flowchart illustrating an exemplary operation of a non-claimed vehicular power supply system 200 illustrated in FIG. 3.
[FIG. 5] FIG. 5 is a flowchart illustrating an exemplary operation of a non-claimed vehicular power supply system 200 illustrated in FIG. 3.
[FIG. 6] FIG. 6 is a diagram illustrating an exemplary configuration of a non-claimed vehicular power supply system 100A in the related art.

### Description of Embodiments

Embodiments of the present invention will be described below with reference to the drawings.

### [First Embodiment]

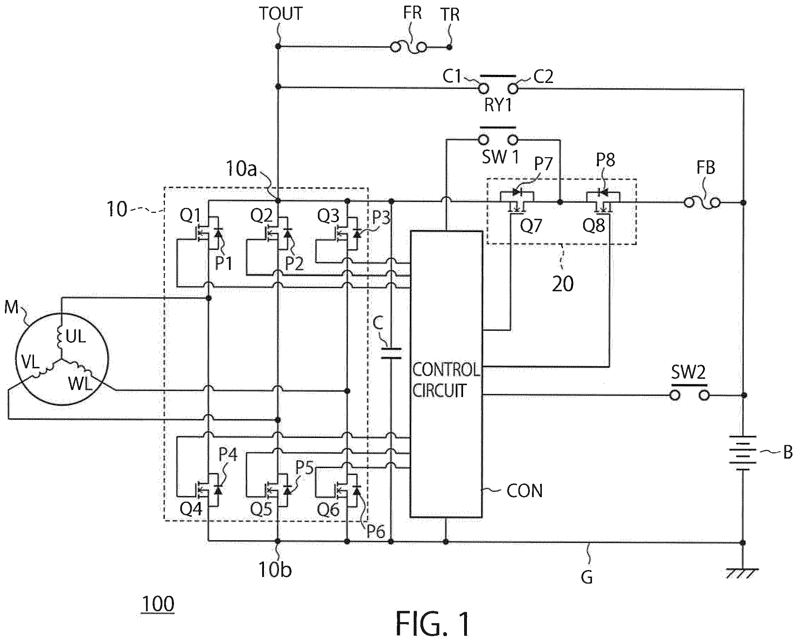

FIG. 1 is a diagram illustrating an exemplary configuration of a vehicular power supply system 100 according to a first embodiment that is one aspect of the present invention.

As illustrated in FIG. 1, the vehicular power supply system 100 includes a motor (three-phase brushless motor) M, a main switch SW1, a starter switch SW2, a battery B, a relay circuit RY1, a smoothing capacitor C, a three-phase bridge circuit 10, a switch circuit 20, a control circuit CON, an output terminal TOUT, a load terminal TR, a battery fuse FB, a load fuse FR, and a grounding wire G.

The vehicular power supply system 100 is mounted on a vehicle (for example, a two-wheel vehicle) not illustrated.

Additionally, the motor M is connected to an engine of the mentioned vehicle (not illustrated). The motor M functions as a starter motor that is a power source to start the engine and also functions as a power generator that generates power from power of the engine after starting the engine.

The main switch SW1 has one end connected to cathodes of first and second control parasitic diodes P7 and P8, and the main switch SW1 has the other end connected to the control circuit CON.

The main switch SW1 is controlled to be turned on or off by a user. The main switch SW1 provides electrical connection between one end and the other end thereof when turned on while the main switch SW1 interrupts the electrical connection between the one end and the other end when turned off.

The starter switch SW2 has the other end connected to the control circuit CON, and the starter switch SW2 has one end connected to a positive electrode of the battery B.

The starter switch SW2 is controlled to be turned on or off by a user. The starter switch SW2 provides electrical connection between one end and the other end thereof when turned on while the starter switch SW2 interrupts the electrical connection between the one end and the other end when turned off.

Note that the engine is started when the starter switch SW2 is turned on.

The battery B has the positive electrode connected to one end of the starter switch SW2 (output terminal TOUT), and a negative electrode connected to the grounding wire G. Note that grounding wire G is grounded.

Furthermore, the load fuse FR is connected between the output terminal TOUT and the load terminal TR.

A load (not illustrated) is connected between the load terminal TR (output terminal TOUT) and the grounding wire G. This load is, for example, any one of a fuel pump of the engine, an injector of the engine, and an ignition coil of the engine, or a head lamp, a tail lamp, a stop lamp, a winker lamp, or the like.

Output voltage at the output terminal TOUT is supplied to the load via the load fuse FR and the load terminal TR.

Additionally, the smoothing capacitor C has one end connected to a first contact C1 (output terminal TOUT) and the other end connected to a negative electrode of the battery B (grounding wire G).

Furthermore, the control circuit CON is connected between the other end of the main switch SW1 and the grounding wire G. The control circuit CON is supplied with power supplied to the other end of the main switch SW1. The control circuit CON is adapted to control the three-phase bridge circuit 10, relay circuit RY1, and switch circuit 20 (first and second control MOS transistors Q7 and Q8).

Furthermore, the control circuit CON can detect a rotational speed of the motor M.

Additionally, in the case where a detected rotational speed of the motor M is a first setting rotational speed or more, the control circuit CON determines that the engine connected to the motor M has been started.

On the other hand, in the case where a detected rotational speed of the motor M is less than the first setting rotational speed, the control circuit CON determines that the engine is on the way of start.

Additionally, the control circuit CON detects voltage at one end of the smoothing capacitor C, and acquires charging voltage at the battery B based on the detected voltage.

Furthermore, the control circuit CON determines that the main switch SW1 is turned on when power is supplied from the other end of the main switch SW1.

On the other hand, the control circuit CON determines that the main switch SW1 is turned off when power is not supplied from the other end of the main switch SW1.

Additionally, in the case where a signal corresponding to voltage at the positive electrode of the battery B is received from the other end of the starter switch SW2 when the starter switch SW2 is turned on, the control circuit CON determines that the starter switch SW2 is turned on.

On the other hand, in the case where a signal corresponding to the voltage at the positive electrode of the battery B is not received from the other end of the starter switch SW2 when the starter switch SW2 is turned off, the control circuit CON determines that the starter switch SW2 is turned off.

Additionally, as illustrated in FIG. 1, when the relay circuit RY1 is turned on, the relay circuit RY1 provides electrical connection between the first contact C1 and the second contact C2 connected to the output terminal TOUT. In other words, when the relay circuit RY1 is turned on, electrically connection is provided between one end 10a of the three-phase bridge circuit (output terminal TOUT) and the positive electrode of the battery B.

On the other hand, when the relay circuit RY1 is turned off, electrical connection between the first contact C1 and the second contact C2 is interrupted. In other words, when the relay circuit RY1 is turned off, electrical connection between the one end 10a of the three-phase bridge circuit (output terminal TOUT) and the positive electrode of the battery B is interrupted.

Additionally, the three-phase bridge circuit 10 has one end connected to the first contact C1 and the other end connected to the grounding wire G.

The three-phase bridge circuit 10 performs motor driving for the motor M by performing phase control for AC power supplied from the motor M and outputting DC power from between the one end and the other end, or by converting DC power of the battery B to AC power and supplying the same to the motor M.

As illustrated in FIG. 1, the three-phase bridge circuit 10 includes, for example, a first MOS transistor Q1, a second MOS transistor Q2, a third MOS transistor Q3, a fourth MOS transistor Q4, a fifth MOS transistor Q5, a sixth MOS transistor Q6, a first diode (parasitic diode) P1, a second diode (parasitic diode) P2, a third diode (parasitic diode) P3, a fourth diode (parasitic diode) P4, a fifth diode (parasitic diode) P5, and a sixth diode (parasitic diode) P6.

The first MOS transistor Q1 has a drain connected to the one end 10a of the three-phase bridge circuit 10 and a source connected to one end of a U-phase coil UL of the motor M. The first MOS transistor Q1 has gate voltage controlled by the control circuit CON. In other words, on/off of the first MOS transistor Q1 is controlled by the control circuit CON.

The first diode P1 has a cathode connected to the drain of the first MOS transistor Q1 and an anode connected to the source of the first MOS transistor Q1.

Furthermore, the second MOS transistor Q2 has a drain connected to the one end 10a of the three-phase bridge circuit 10 and a source connected to one end of a V-phase coil VL of the motor M. The second MOS transistor Q2 has gate voltage controlled by the control circuit CON. In other words, on/off of the second MOS transistor Q2 is controlled by the control circuit CON.

The second diode P2 has a cathode connected to the drain of the second MOS transistor Q2 and an anode connected to the source of the second MOS transistor Q2.

Furthermore, the third MOS transistor Q3 has a drain connected to the one end 10a of the three-phase bridge circuit 10 and a source connected to one end of a W-phase coil WL of the motor M. The third MOS transistor Q3 has gate voltage controlled by the control circuit CON. In other words, on/off of the third MOS transistor Q3 is controlled by the control circuit CON.

The third diode P3 has a cathode connected to the drain of the third MOS transistor Q3 and an anode connected to the source of the third MOS transistor Q3.

Additionally, the fourth MOS transistor Q4 has a drain connected to the one end of the U-phase coil UL of the motor M and a source connected to the other end 10b of the three-phase bridge circuit 10. The fourth MOS transistor Q4 has gate voltage controlled by the control circuit CON. In other words, on/off of the fourth MOS transistor Q4 is controlled by the control circuit CON.

The fourth diode P4 has a cathode connected to the drain of the fourth MOS transistor Q4 and an anode connected to the source of the fourth MOS transistor Q4.

The fifth MOS transistor Q5 has a drain connected to the one end of the V-phase coil VL of the motor M and a source connected to the other end 10b of the three-phase bridge circuit 10. The fifth MOS transistor Q5 has gate voltage controlled by the control circuit CON. In other words, on/off of the fifth MOS transistor Q5 is controlled by the control circuit CON.

The fifth diode P5 has a cathode connected to the drain of the fifth MOS transistor Q5 and an anode connected to the source of the fifth MOS transistor Q5.

The sixth MOS transistor Q6 has a drain connected to the one end of the W-phase coil WL of the motor M and a source connected to the other end 10b of the three-phase bridge circuit 10. The sixth MOS transistor Q6 has gate voltage controlled by the control circuit CON. In other words, on/off of the sixth MOS transistor Q6 is controlled by the control circuit CON.

The sixth diode P6 has a cathode connected to the drain of the sixth MOS transistor Q6 and an anode connected to the source of the sixth MOS transistor Q6.

Meanwhile, the other end of the U-phase coil UL is connected to the other end of each of the V-phase coil VL and the W-phase coil WL as illustrated in FIG. 1.

Furthermore, the battery fuse FB has one end connected to the positive electrode of the battery B and the other end connected to the other end of the switch circuit 20 (one end of the second control MOS transistor Q8).

Additionally, the switch circuit 20 has one end connected to the one end 10a of the three-phase bridge circuit 10 and the other end connected to the positive electrode of the battery B via the battery fuse FB. On/off of the switch circuit 20 is controlled by the control circuit CON.

As illustrated in FIG. 1, the switch circuit 20 includes, for example, the first control MOS transistor (first control transistor) Q7, first control parasitic diode (body diode) P7, second control MOS transistor (second control transistor) Q8, and second control parasitic diode (body diode) P8.

The first control MOS transistor Q7 has one end (source) connected to the one end 10a of the three-phase bridge circuit and the other end (drain) connected to the one end of the main switch SW1. The first control MOS transistor Q7 has gate voltage controlled by the control circuit CON. In other words, on/off of the first control MOS transistor Q7 is controlled by the control circuit CON.

Furthermore, the first control parasitic diode P7 has an anode connected to the one end (source) of the first control MOS transistor Q7 and a cathode connected to the other end (drain) of the first control MOS transistor Q7.

Furthermore, the second control MOS transistor Q8 has one end (source) connected to the other end of the battery fuse FB and the other end (drain) connected to the one end of the main switch SW1. The second control MOS transistor Q8 has gate voltage controlled by the control circuit CON. In other words, on/off of the second control MOS transistor Q8 is controlled by the control circuit CON.

Furthermore, the second control parasitic diode P8 has an anode connected to the one end (source) of the second control MOS transistor Q8 and a cathode connected to the other end (drain) of the second control MOS transistor Q8.

The switch circuit 20 is turned on when the first and second control MOS transistors Q7 and Q8 are turned on by the control circuit CON in a synchronized manner.

On the other hand, the switch circuit 20 is turned off when the first and second control MOS transistors Q7 and Q8 are turned off by the control circuit CON in a synchronized manner.

Additionally, the second control parasitic diode P8 has a cathode connected to the one end of the main switch SW1 and an anode connected to the positive electrode of the battery B via the battery fuse FB.

Here, for example, in the case of performing cell drive for the engine, when the main switch SW1 is turned on, voltage (power) of the battery B is supplied from the positive electrode of the battery B to the control circuit CON via the battery fuse FB, the second control parasitic diode P8, and the main switch SW1 that is turned on.

Then, when the starter switch SW2 is turned on, the control circuit CON turns on the relay circuit RY1. Consequently, DC power is received in the three-phase bridge circuit 10 from the battery B via the relay circuit RY1 that is turned on.

Then, the control circuit CON controls the first to sixth MOS transistors Q1 to Q6 of the three-phase bridge circuit 10 and converts the DC power received in the three-phase bridge circuit 10 to AC power to perform motor driving for the motor M. Consequently, the engine connected to the motor M is rotated.

While the engine is rotated by this motor driving, voltage at the battery B is supplied to the load via the output terminal TOUT, load fuse FR, and load terminal TR, thereby starting the engine.

Additionally, the first control parasitic diode P7 has the cathode connected to the cathode of the second control parasitic diode P8 (one end of the main switch SW1) and the anode connected to one end 10a of the three-phase bridge circuit 10.

Here, for example, in the case of performing kick drive for the engine by a user, when the main switch SW1 is turned on and the motor M is rotated by kicking, voltage (power) rectified in the first to sixth diodes P1 to P6 of the three-phase bridge circuit 10 is supplied to the control circuit CON via the first control parasitic diode P7 and the main switch SW1 that is turned on.

While the motor M is rotated by this kick drive and also the engine is rotated, the voltage rectified in the three-phase bridge circuit 10 is supplied to the load via the output terminal TOUT, load fuse FR, and load terminal TR, thereby starting the engine.

Meanwhile, in this example of kick drive, assumed is a case where, for example, charging voltage at the battery B is low or the battery B is deteriorated.

Next, an exemplary operation of the vehicular power supply system 100 (control method for the vehicular power supply system 100) having the above-described configuration will be described.

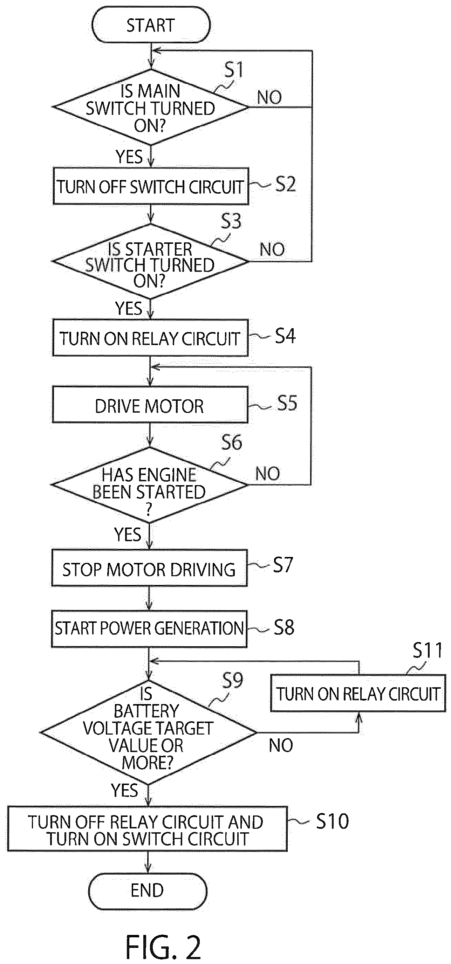

FIG. 2 is a flowchart illustrating an exemplary operation of the vehicular power supply system 100 illustrated in FIG. 1.

As illustrated in FIG. 2, the control circuit CON first determines whether the main switch SW1 is turned on (step S1). As described above, the control circuit CON determines that the main switch SW1 is turned on when power is supplied from the other end of the main switch SW1. Note that the relay circuit RY1 is turned off at this point.

Next, in the case of determining that the main switch SW1 is turned on, the control circuit CON turns off the first and second control MOS transistors Q7 and Q8 (switch circuit 20) (step S2).

Next, in the case of determining that the main switch SW1 is turned on, the control circuit CON determines whether the starter switch SW2 is turned on (step S3).

Meanwhile, as described above, in the case where a signal corresponding to voltage at the positive electrode of the battery B is received from the other end of the starter switch SW2 when the starter switch SW2 is turned on, the control circuit CON determines that the starter switch SW2 is turned on. On the other hand, in the case where a signal corresponding to the voltage at the positive electrode of the battery B is not received from the other end of the starter switch SW2 when the starter switch SW2 is turned off, the control circuit CON determines that the starter switch SW2 is turned off.

Then, in the case of determining in step S3 that the starter switch SW2 is turned on, the control circuit CON turns on the relay circuit RY1 (step S4).

Meanwhile, in the case of determining in step S1 that the main switch SW1 is not turned on or in the case of determining in step S3 that the starter switch SW2 is not turned on, the processing return returns to step S1.

Then, in step S4, the control circuit CON controls the three-phase bridge circuit 10 to perform motor driving for the motor M after turning on the relay circuit RY1 (step S5).

Then, after performing the motor driving for the motor M in step S5, the control circuit CON determines whether the engine connected to the motor M has been started (step S6).

Meanwhile, as described above, in the case where a detected rotational speed of the motor M is the first setting rotational speed or more, the control circuit CON determines that the engine connected to the motor M has been started. On the other hand, in the case where a detected rotational speed of the motor M is less than the first setting rotational speed, the control circuit CON determines that the engine is on the way of start.

Then, in the case of determining in step S6 that the engine has been started, the control circuit CON stops the motor driving performed by the three-phase bridge circuit 10 (step S7).

Meanwhile, in the case of determining in step S6 that the engine has not been started yet (the engine is on the way of start), the processing returns to step S5 and the control circuit CON continues the motor driving for the motor M.

Then, after stopping the motor driving, the control circuit CON starts power generation in the motor M by controlling the three-phase bridge circuit 10 to perform phase control for AC power supplied from the motor M and outputting DC power from between the one end 10a and the other end of the three-phase bridge circuit 10 (step S8).

After that, in a first state in which the engine is driven and the phase control is performed in the three-phase bridge circuit 10, the control circuit CON determines whether charging voltage at the battery B is preset target voltage or more (step S9). Meanwhile, as described above, the control circuit CON detects voltage at the one end of the smoothing capacitor C and indirectly acquires the charging voltage at the battery B based on the detected voltage.

Then, in the case where the charging voltage at the battery B is the target voltage or more, the control circuit CON turns off the relay circuit RY1 and controls the three-phase bridge circuit 10 to perform phase control for the AC power supplied from the motor M and outputs the DC power from between the one end 10a and the other end of the three-phase bridge circuit 10, and further turns on the first and second control MOS transistors Q7 and Q8 (switch circuit 20) (step S10). Consequently, the battery B is charged.

On the other hand, in the case where the charging voltage at the battery B is less than the target voltage in the first state of step S9, the control circuit CON controls the three-phase bridge circuit 10 to perform phase control for the AC power supplied from the motor M and outputs the DC power from between the one end 10a and the other end 10b of the three-phase bridge circuit 10 while keeping the relay circuit RY1 turned on and the first and second control MOS transistors Q7 and Q8 (switch circuit 20) turned off (step S11). In this case, since no current flows in the switch circuit 20, current consumption in the switch circuit 20 can be reduced.

With the above steps S1 to S11, the number of relay circuits is reduced to one while power loss by the switch circuit arranged in a charging path of the battery B is reduced in the vehicular power supply system 100 according to one aspect of the present invention.

As described above, the vehicular power supply system 100 according to one aspect of the present invention includes: the motor M connected to an engine of a vehicle; the main switch SW1 controlled to be turned on or off; the starter switch SW2 controlled to be turned on or off and used to start the engine; the battery B having the positive electrode connected to the one end of the starter switch SW2 and the negative electrode connected to the grounding wire G; the battery fuse FB having the one end connected to the positive electrode of the battery B; the relay circuit RY1 adapted to electrically connect the first contact C1 connected to the output terminal TOUT to the second contact C2 connected to the positive electrode of the battery B when turned on, and on the other hand, adapted to interrupt electrical connection between the first contact C1 and the second contact C2 when turned off; the smoothing capacitor C having the one end connected to the first contact C1 and the other end connected to the negative electrode of the battery B; the three-phase bridge circuit 10 having the one end connected to the first contact C1 and the other end connected to the grounding wire G, and adapted to perform motor driving for the motor M by performing phase control for AC power supplied from the motor M and outputting DC power from between the one end 10a and the other end 10b or by converting DC power of the battery B to AC power and supplying the same to the motor M; the first control transistor Q7 having the one end connected to the one end 10a of the three-phase bridge circuit 10 and the other end connected to one end of the main switch SW1; the first control parasitic diode P7 having the anode connected to the one end of the first control transistor Q7 and the cathode connected to the other end of the first control transistor Q7; the second control transistor Q8 having the one end connected to the other end of battery fuse FB and the other end connected to the one end of the main switch SW1; the second control parasitic diode P8 having the anode connected to the one end of the second control transistor Q8 and the cathode connected to the other end of the second control transistor Q8; and the control circuit CON connected between the other end of the main switch SW1 and the grounding wire G, supplied with power supplied to the other end of the main switch SW1, and adapted to control the three-phase bridge circuit 10, relay circuit RY1, and first and second control transistors Q7 and Q8.

Thus, in the vehicular power supply system 100 according to one aspect of the present invention, the power is supplied to the control circuit CON via the first and second control parasitic diodes P7 and P8 of the first and second control transistors Q7 and Q8 when the main switch SW1 is turned on, and also the power generated from the motor M can be prevented from being consumed by the battery B during kick drive.

Consequently, there is no need to separately arrange a diode element in order to prevent the power generated from the motor M from being consumed by the battery B during the kick drive.

Additionally, in the vehicular power supply system 100 according to one aspect of the present invention, the current path can be controlled such that current flows to the battery fuse FB by control of the one relay circuit RY1 and the first and second control transistors Q7 and Q8. Consequently, for example, in the case where voltage at the battery B is the target voltage, the current path is controlled such that the battery fuse FB is blown at the time of overcurrent.

Thus, according to the vehicular power supply system of the present invention, the number of diode elements and relay circuits can be reduced.

### [Second Embodiment]

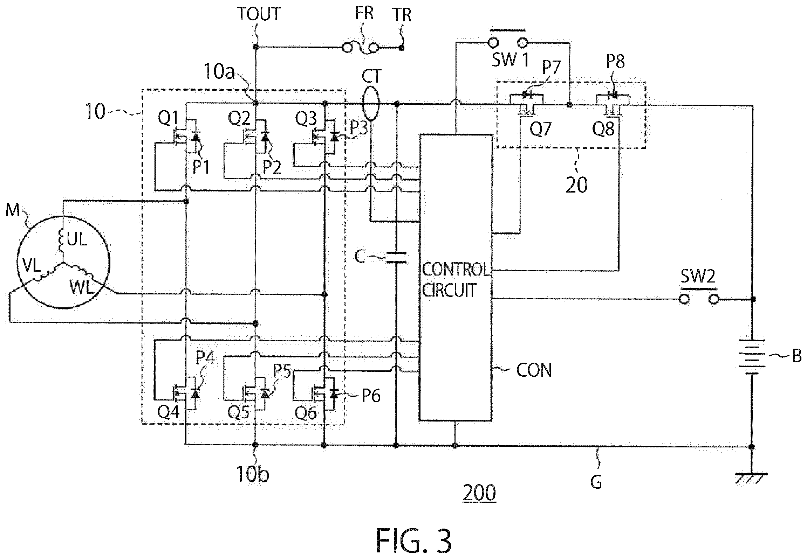

In a second embodiment, an exemplary configuration of a vehicular power supply system in which a battery fuse and a relay circuit are omitted will be described. FIG. 3 is a diagram illustrating an exemplary configuration of a vehicular power supply system 200 according to the second embodiment that is one aspect of the present invention. In FIG. 3, note that a reference sign same as that in FIG. 1 represents the same component in a first embodiment, and a description therefor will be omitted.

As illustrated in FIG. 3, a non-claimed vehicular power supply system 200 includes a motor (three-phase brushless motor) M, a main switch SW1, a starter switch SW2, a battery B, a smoothing capacitor C, a three-phase bridge circuit 10, a switch circuit 20, a control circuit CON, an output terminal TOUT, a load terminal TR, a load fuse FR, and a grounding wire G.

Compared to a vehicular power supply system 100 of the first embodiment, a battery fuse FB and a relay circuit RY1 are omitted in the vehicular power supply system 200.

Here, the control circuit CON is adapted to control the three-phase bridge circuit 10 and the switch circuit 20 (first and second control MOS transistors Q7 and Q8).

The control circuit CON includes a detection unit CT. The detection unit CT detects current flowing between one end 10a of the three-phase bridge circuit 10 and a positive electrode of the battery B.

Using the detection unit CT, the control circuit CON detects the current flowing between the one end 10a of the three-phase bridge circuit 10 and the positive electrode of the battery B, and controls the first and second control MOS transistors based on a detection value of the detected current.

For example, as illustrated in FIG. 3, the detection value is a detection value of the current flowing between the one end 10a of the three-phase bridge circuit 10 and one end (source) of the first control MOS transistor Q7.

Furthermore, the smoothing capacitor C has one end connected to the output terminal TOUT and the other end connected to a negative electrode of the battery B (grounding wire G).

Here, as illustrated in FIG. 3, the switch circuit 20 has one end connected to the one end 10a of the three-phase bridge circuit 10 and the other end connected to the positive electrode of the battery B. On/off of the switch circuit 20 is controlled by the control circuit CON.

As illustrated in FIG. 3, the switch circuit 20 includes, for example, the first control MOS transistor (first control transistor) Q7, a first control parasitic diode (body diode) P7, the second control MOS transistor (second control transistor) Q8, and a second control parasitic diode (body diode) P8.

The first control MOS transistor Q7 has one end (source) connected to the one end 10a of the three-phase bridge circuit and the other end (drain) connected to the one end of the main switch SW1. The first control MOS transistor Q7 has gate voltage controlled by the control circuit CON. In other words, on/off of the first control MOS transistor Q7 is controlled by the control circuit CON.

Furthermore, the first control parasitic diode P7 has an anode connected to the one end (source) of the first control MOS transistor Q7 and a cathode connected to the other end (drain) of the first control MOS transistor Q7.

Furthermore, the second control MOS transistor Q8 has one end (source) connected to the positive electrode of the battery B and the other end (drain) connected to the one end of the main switch SW1. The second control MOS transistor Q8 has gate voltage controlled by the control circuit CON. In other words, on/off of the second control MOS transistor Q8 is controlled by the control circuit CON.

Additionally, the second control parasitic diode P8 has an anode connected to the one end (source) of the second control MOS transistor and a cathode connected to the other end (drain) of the second control MOS transistor.

The switch circuit 20 is turned on when the first and second control MOS transistors Q7 and Q8 are turned on by the control circuit CON in a synchronized manner.

On the other hand, the switch circuit 20 is turned off when the first and second control MOS transistors Q7 and Q8 are turned off by the control circuit CON in a synchronized manner.

As described above, the second control parasitic diode P8 has the cathode connected to the one end of the main switch SW1 and the anode connected to the positive electrode of the battery B.

Here, for example, in the case of performing cell drive for the engine, when the main switch SW1 is turned on, voltage (power) of the battery B is supplied from the positive electrode of the battery B to the control circuit CON via the second control parasitic diode P8 and the main switch SW1 that is turned on.

Then, when the starter switch SW2 is turned on, the control circuit CON turns on the switch circuit 20. Consequently, DC power is received in the three-phase bridge circuit 10 from the battery B via the switch circuit 20 that is turned on.

Then, the control circuit CON controls first to sixth MOS transistors Q1 to Q6 of the three-phase bridge circuit 10 and converts the DC power received in the three-phase bridge circuit 10 to AC power to perform motor driving for the motor M. Consequently, the engine connected to the motor M is rotated.

While the engine is rotated by this motor driving, voltage at the battery B is supplied to the load via the output terminal TOUT, load fuse FR, and load terminal TR, thereby starting the engine.

Additionally, as described above, the first control parasitic diode P7 has the cathode connected to the cathode of the second control parasitic diode P8 (one end of the main switch SW1) and the anode connected to one end 10a of the three-phase bridge circuit 10.

Here, for example, in the case of performing kick drive for the engine by a user, when the main switch SW1 is turned on and the motor M is rotated by kicking, voltage (power) rectified in the first to sixth diodes P1 to P6 of the three-phase bridge circuit 10 is supplied to the control circuit CON via the first control parasitic diode P7 and the main switch SW1 that is turned on. At this time, the switch circuit 20 is turned off.

While the motor M is rotated by this kick drive and also the engine is rotated, the voltage rectified in the three-phase bridge circuit 10 is supplied to the load via the output terminal TOUT, load fuse FR, and load terminal TR, thereby starting the engine.

Meanwhile, in this example of kick drive, assumed is a case where, for example, charging voltage at the battery B is low or the battery B is deteriorated.

Other components of the vehicular power supply system 200 are similar to those of the vehicular power supply system 100 illustrated in FIG. 1.

Next, an exemplary operation of the vehicular power supply system 200 having the above-described configuration (control method for the vehicular power supply system 200) will be described.

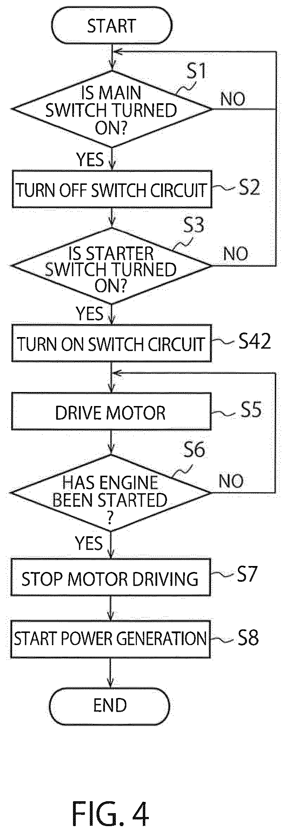

FIG. 4 is a flowchart illustrating an exemplary operation of the vehicular power supply system 200 illustrated in FIG. 3.

As illustrated in FIG. 4, the control circuit CON first determines whether the main switch SW1 is turned on (step S1) in a manner similar to the first embodiment.

Next, in the case of determining that the main switch SW1 is turned on, the control circuit CON turns off the first and second control MOS transistors Q7 and Q8 (switch circuit 20) (step S2).

Next, in the case of determining that the main switch SW1 is turned on, the control circuit CON determines whether the starter switch SW2 is turned on (step S3).

Then, in the case of determining in step S3 that the starter switch SW2 is turned on, the control circuit CON turns on the first and second control MOS transistors Q7 and Q8 (switch circuit 20) (step S42).

Meanwhile, in the case of determining in step S1 that the main switch SW1 is not turned on or in the case of determining in step S3 that the starter switch SW2 is not turned on, the processing returns to step S1.

Then, the control circuit CON controls the three-phase bridge circuit 10 to perform motor driving for the motor M (step S5) after turning on the first and second control MOS transistors Q7 and Q8 (switch circuit 20) in step S42.

Then, after performing the motor driving for the motor M in step S5, the control circuit CON determines whether the engine connected to the motor M has been started (step S6).

Then, in the case of determining in step S6 that the engine has been started, the control circuit CON stops the motor driving performed by the three-phase bridge circuit 10 (step S7).

Meanwhile, in the case of determining in step S6 that the engine has not been started yet (the engine is on the way of start), the processing returns to step S5 and the control circuit CON continues the motor driving for the motor M.

Then, after stopping the motor driving, the control circuit CON starts power generation in the motor M by controlling the three-phase bridge circuit 10 to perform phase control for AC power supplied from the motor M and outputting DC power from between the one end 10a and the other end of the three-phase bridge circuit 10 (step S8).

With the above steps S1 to S8, the relay circuit can be omitted while reducing power loss by the switch circuit arranged in a charging path of the battery B in the vehicular power supply system 200 according to one aspect of the present invention.

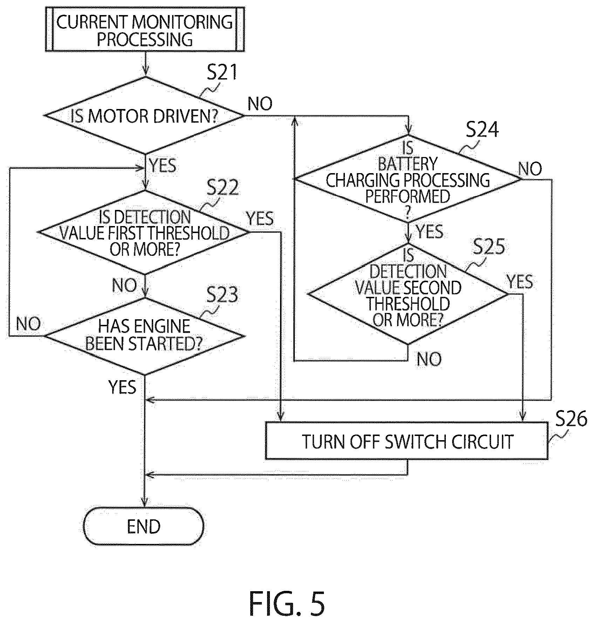

Here, an exemplary operation of current monitoring processing in the present embodiment will be described. This current monitoring processing is processing peculiar to the present embodiment in which the battery fuse is omitted. FIG. 5 is a flowchart illustrating an exemplary operation of the vehicular power supply system 200 illustrated in FIG. 3.

As illustrated in FIG. 5, the control circuit CON determines whether the motor is driven (step S21).

Next, in the case of determining in step S21 that the motor is driven, the control circuit CON determines whether a detection value of current flowing between the one end 10a of the three-phase bridge circuit 10 and the positive electrode of the battery B is a preset first threshold or more (step S22). Meanwhile, as described above, the control circuit CON detects the current flowing between the one end 10a of the three-phase bridge circuit 10 and the positive electrode of the battery B by using the detection unit CT.

Then, in the case of determining that the detection value is less than the first threshold, the control circuit CON determines whether the engine connected to the motor M has been started (step S23).

Then, in the case of determining in step S23 that the engine has been started, the control circuit CON stops motor driving performed by the three-phase bridge circuit 10.

Meanwhile, in the case where the control circuit CON determines in step S23 that the engine has not been started yet in step S23 (the engine is on the way of start), the processing returns to step S22.

Additionally, in the case of determining in step S22 that the detection value is the first threshold or more, the control circuit CON turns off the first and second control MOS transistors (step S26).

Consequently, overcurrent (current of the first threshold or more) during the motor driving can be interrupted.

On the other hand, in the case of determining in step S21 that the motor is not driven, the control circuit CON performs phase control for AC power supplied from the motor M and determines whether DC power is output from between the one end 10a and the other end 10b of the three-phase bridge circuit 10 (whether the battery B is charged) (step S24).

Next, in the case of determining in step S24 that the DC power is output from between the one end 10a and the other end 10b of the three-phase bridge circuit 10 (the battery B is charged), the control circuit CON determines whether the detection value is equal to or more than a second threshold that is smaller than the first threshold (step S25).

Next, in the case of determining that the detection value is the second threshold or more, the control circuit CON turns off the first and second control MOS transistors (step S26).

Consequently, overcurrent (current of the second threshold or more) during charge of the battery B can be interrupted. Meanwhile, the second threshold is set to a value smaller than the first threshold because overcurrent during charge of the battery B is smaller than overcurrent during motor driving.

As described above, in the vehicular power supply system 200 according to the present embodiment, overcurrent can be suppressed by controlling the first and second control MOS transistors based on a detection value of the current flowing between the one end of the three-phase bridge circuit and the positive electrode of the battery. In other words, the battery fuse and the relay circuit can be omitted.

Furthermore, other operation characteristics of the vehicular power supply system 200 are similar to those of the first embodiment.

In other words, according to the vehicular power supply system, the number of diode elements and relay circuits can be reduced in a manner similar to the first embodiment.

## Claims

1. A vehicular power supply system (100) comprising:
a motor (M) connected to an engine of a vehicle, wherein the engine can be started with the motor (M) either acting as starter or rotated by kick drive;
a main switch (SW1) controlled to be turned on or off;
a starter switch (SW2) controlled to be turned on or off and used to start the engine;
a battery (B) having a positive electrode connected to one end of the starter switch (SW2) and a negative electrode connected to a grounding wire (G);
a battery fuse (FB) having one end connected to the positive electrode of the battery (B);
a relay circuit (RY1) configured to electrically connect a first contact (C1) connected to an output terminal (TOUT) to a second contact (C2) connected to the positive electrode of the battery (B) when turned on, and configured to interrupt electrical connection between the first contact (C1) and the second contact (C2) when turned off;
a smoothing capacitor (C) having one end connected to the first contact (C1) and the other end connected to the negative electrode of the battery (B);
a three-phase bridge circuit (10) having one end connected to the first contact (C1) and the other end connected to the grounding wire (G), and configured to perform motor driving for the motor (M) by performing phase control for AC power supplied from the motor (M) and outputting DC power from between the one end and the other end or by converting DC power of the battery (B) to AC power and supplying the AC power to the motor (M);
a control circuit (CON) connected to the other end of the main switch (SW1), to the other end of the starter switch (SW2) and to the grounding wire, supplied with power supplied to the other end of the main switch (SW1), and configured to control the three-phase bridge circuit (10), and the relay circuit (RY1), **characterized in that** it is further comprising:
a first control transistor (Q7) having one end connected to the one end of the three-phase bridge circuit (10) and the other end connected to one end of the main switch (SW1);
a first control parasitic diode (P7) having an anode connected to the one end of the first control transistor (Q7) and a cathode connected to the other end of the first control transistor (Q7);
a second control transistor (Q8) having one end connected to the other end of the battery fuse (FB) and the other end connected to the one end of the main switch (SW1); and
a second control parasitic diode (P8) having an anode connected to the one end of the second control transistor (Q8) and a cathode connected to the other end of the second control transistor (Q8);
wherein the control circuit (CON) is further configured to control the first and second control transistors (Q7, Q8).

2. The vehicular power supply system according to claim 1, wherein the control circuit (CON) is configured to:
determine whether the main switch (SW1) is turned on;
turn off the first and second control transistors (Q7, Q8) in the case of determining that the main switch (SW1) is turned on;
determine whether the starter switch (SW2) is turned on after turning off the first and second control transistors (Q7, Q8);
turn on the relay circuit (RY1) in the case where the starter switch (SW2) is turned on;
control the three-phase bridge circuit (10) to perform motor driving for the motor (M) after turning on the relay circuit (RY1);
determine whether the engine connected to the motor (M) has been started after performing motor driving for the motor (M);
stop the motor driving performed by the three-phase bridge circuit (10) in the case of determining that the engine has been started;
control the three-phase bridge circuit (10) to perform phase control for AC power supplied from the motor (M) after stopping the motor driving, and output DC power from between one end and the other end of the three-phase bridge circuit (10);
determine whether charging voltage at the battery (B) is preset target voltage or more in a first state in which the engine is driven and phase control is performed in the three-phase bridge circuit (10); and
turn off the relay circuit (RY1) in the case where the charging voltage at the battery (B) is the preset target voltage or more, control the three-phase bridge circuit (10) to perform phase control for AC power supplied from the motor (M), and output DC power from between the one end and the other end of the three-phase bridge circuit (10), and further turn on the first and second control transistors (Q7, Q8).

3. The vehicular power supply system according to claim 2, wherein in the case where the charging voltage at the battery (B) is less than the target voltage in the first state, the control circuit (CON) controls the three-phase bridge circuit (10) to perform phase control for AC power supplied from the motor (M), and outputs DC power from between the one end and the other end of the three-phase bridge circuit (10) while keeping the relay circuit (RY1) turned on and the first and second control transistors (Q7, Q8) turned off.

4. The vehicular power supply system (100) according to claim 1, further comprising a load fuse (FR) connected between the output terminal (TOUT) and a load terminal (TR) to which a load is connected.

5. The vehicular power supply system (100) according to claim 2, wherein the control circuit (CON) is configured to:
be able to detect a rotational speed of the motor (M),
determine that the engine connected to the motor (M) has been started in the case where a rotational speed of the motor (M) is a first setting rotational speed or more, and
on the other hand, determine that the engine is on the way of start in the case where a rotational speed of the motor (M) is less than the first setting rotational speed.

6. The vehicular power supply system (100) according to claim 2, wherein the control circuit (CON) detects voltage at one end of the smoothing capacitor (C) and acquires charging voltage at the battery (B) based on the detected voltage.

7. The vehicular power supply system (100) according to claim 2, wherein
the one end of the starter switch (SW2) is connected to the positive electrode of the battery (B), and
the control circuit (CON) is configured to:
determine that the starter switch (SW2) is turned on in the case where a signal corresponding to voltage at the positive electrode of the battery (B) is received from the other end of the starter switch (SW2) when the starter switch (SW2) is turned on; and
on the other hand, determine that the starter switch (SW2) is turned off in the case where a signal corresponding to voltage at the positive electrode of the battery (B) is not received from the other end of the starter switch (SW2) when the starter switch (SW2) is turned off.

8. The vehicular power supply system (100) according to claim 2, wherein the control circuit (CON) is configured to:
determine that the main switch (SW1) is turned on when power is supplied from the other end of the main switch (SW1), and
on the other hand, determine that the main switch (SW1) is turned off when power is not supplied from the other end of the main switch (SW1).

9. The vehicular power supply system (100) according to claim 1, wherein the three-phase bridge circuit (10) includes:
a first MOS transistor (Q1) having a drain connected to the one end of the three-phase bridge circuit (10) and a source connected to one end of a U-phase coil (UL) of the motor (M), and having gate voltage controlled by the control circuit (CON);
a first diode (P1) having a cathode connected to the drain of the first MOS transistor (Q1) and an anode connected to the source of the first MOS transistor (Q1);
a second MOS transistor (Q2) having a drain connected to the one end of the three-phase bridge circuit (10) and a source connected to one end of a V-phase coil (VL) of the motor (M), and having gate voltage controlled by the control circuit (CON);
a second diode (P2) having a cathode connected to the drain of the second MOS transistor and an anode connected to the source of the second MOS transistor (Q2);
a third MOS transistor (Q3) having a drain connected to the one end of the three-phase bridge circuit (10) and a source connected to one end of a W-phase coil (WL) of the motor (M), and having gate voltage controlled by the control circuit (CON);
a third diode (P3) having a cathode connected to the drain of the third MOS transistor (Q3) and an anode connected to the source of the third MOS transistor (Q3);
a fourth MOS transistor (Q4) having a drain connected to the one end of the U-phase coil (UL) of the motor (M) and a source connected to the other end of the three-phase bridge circuit (10), and having gate voltage controlled by the control circuit (CON);
a fourth diode (P4) having a cathode connected to the drain of the fourth MOS transistor (Q4) and an anode connected to the source of the fourth MOS transistor (Q4);
a fifth MOS transistor (Q5) having a drain connected to the one end of the V-phase coil (VL) of the motor (M) and a source connected to the other end of the three-phase bridge circuit (10), and having gate voltage controlled by the control circuit (CON);
a fifth diode (P5) having a cathode connected to the drain of the fifth MOS transistor (Q5) and an anode connected to the source of the fifth MOS transistor (Q5);
a sixth MOS transistor (Q6) having a drain connected to the one end of the W-phase coil (WL) of the motor (M) and a source connected to the other end of the three-phase bridge circuit (10), and having gate voltage controlled by the control circuit (CON); and
a sixth diode (P6) having a cathode connected to the drain of the sixth MOS transistor (Q6) and an anode connected to the source of the sixth MOS transistor (Q6).

10. The vehicular power supply system according to claim 9, wherein when the main switch (SW1) is turned on and the motor (M) is rotated by kicking, voltage rectified in the first to sixth diodes (P1, P2, P3, P4, P5, P6) of the three-phase bridge circuit (10) is supplied to the control circuit (CON) via the first control parasitic diode (P7) and the main switch (SW1) that is turned on.

11. The vehicular power supply system according to claim 1, wherein when the motor (M) is configured to function as a starter motor that is a power source to start the engine and also is configured to function as a power generator that generates power from power of the engine after starting the engine.

12. A control method for a vehicular power supply system(100) according to claim 1 comprising the following steps:
determining whether the main switch (SW1) is turned on (step S1);
turning off the first and second control transistors (Q7, Q8) in the case of determining that the main switch (SW1) is turned on (step S2);
determining whether the starter switch (SW2) is turned on after turning off the first and second control transistors (Q7, Q8) (step S3);
turning on the relay circuit (RY1) in the case where the starter switch (SW2) is turned on (step S4);
controlling the three-phase bridge circuit (10) to perform motor driving for the motor (M) after turning on the relay circuit (RY1) (step S5);
determining whether the engine connected to the motor (M) has been started after performing motor driving for the motor (M) (step S6);
stopping motor driving performed by the three-phase bridge circuit (10) in the case of determining that the engine has been started (step S7);
controlling the three-phase bridge circuit (10) to perform phase control for AC power supplied from the motor (M) after stopping the motor driving, and outputting DC power from between one end and the other end of the three-phase bridge circuit (10) (step S8);
determining whether charging voltage at the battery (B) is preset target voltage or more in a first state in which the engine is driven and phase control is performed in the three-phase bridge circuit (10) (step S9); and
turning off the relay circuit (RY1) in the case where the charging voltage at the battery (B) is the preset target voltage or more, controlling the three-phase bridge circuit (10) to perform phase control for AC power supplied from the motor (M), and outputting DC power from between the one end and the other end of the three-phase bridge circuit (10), and further turning on the first and second control transistors (Q7, Q8) (step S10),
wherein in the case where the charging voltage at the battery (B) is less than the target voltage in the first state, the control circuit (CON) controls the three-phase bridge circuit (10) to perform phase control for AC power supplied from the motor (M), and outputs DC power from between the one end and the other end of the three-phase bridge circuit (10) while keeping the relay circuit (RY1) turned on and the first and second control transistors (Q7, Q8) turned off (step S11).

## Patentansprüche

1. Stromversorgungssystem (100) für Fahrzeuge, umfassend:
einen Motor (M), der mit einer Kraftmaschine eines Fahrzeugs verbunden ist, wobei die Kraftmaschine mit dem Motor (M) gestartet werden kann, indem er entweder als Anlasser fungiert oder durch einen Kickantrieb gedreht wird;
einen Hauptschalter (SW1), der gesteuert wird, um einoder ausgeschaltet zu werden;
einen Anlassschalter (SW2), der gesteuert wird, um einoder ausgeschaltet zu werden, und verwendet wird, um die Kraftmaschine zu starten;
eine Batterie (B) mit einer positiven Elektrode, die mit einem Ende des Anlassschalters (SW2) verbunden ist, und einer negativen Elektrode, die mit einem Erdungsdraht (G) verbunden ist;
eine Batteriesicherung (FB), die ein Ende mit der positiven Elektrode der Batterie (B) verbunden aufweist;
eine Relaisschaltung (RY1), die dazu ausgelegt ist, einen ersten Kontakt (C1), der mit einem Ausgangsanschluss (TOUT) verbunden ist, elektrisch mit einem zweiten Kontakt (C2) zu verbinden, der mit der positiven Elektrode der Batterie (B) verbunden ist, wenn eingeschaltet, und dazu ausgelegt ist, die elektrische Verbindung zwischen dem ersten Kontakt (C1) und dem zweiten Kontakt (C2) zu unterbrechen, wenn ausgeschaltet;
einen Glättungskondensator (C), der ein Ende mit dem ersten Kontakt (C1) verbunden und das andere Ende mit der negativen Elektrode der Batterie (B) verbunden aufweist;
eine dreiphasige Brückenschaltung (10), die ein Ende mit dem ersten Kontakt (C1) verbunden und das andere Ende mit dem Erdungsdraht (G) verbunden aufweist und dazu ausgelegt ist, Motorantrieb für den Motor (M) durchzuführen, indem sie Phasensteuerung für AC-Strom durchführt, der vom Motor (M) zugeführt wird, und DC-Strom von zwischen dem einen Ende und dem anderen Ende ausgibt oder indem sie DC-Strom der Batterie (B) in AC-Strom umwandelt und den AC-Strom dem Motor (M) zuführt;
eine Steuerschaltung (CON), die mit dem anderen Ende des Hauptschalters (SW1), dem anderen Ende des Anlassschalters (SW2) und dem Erdungsdraht verbunden ist, mit Strom versorgt wird, der dem anderen Ende des Hauptschalters (SW1) zugeführt wird, und dazu ausgelegt ist, die dreiphasige Brückenschaltung (10) und die Relaisschaltung (RY1) zu steuern, **dadurch gekennzeichnet, dass** sie ferner umfasst:
einen ersten Steuertransistor (Q7), der ein Ende mit dem einen Ende der dreiphasigen Brückenschaltung (10) verbunden und das andere mit einem Ende des Hauptschalters (SW1) verbunden aufweist;
eine erste parasitäre Steuerdiode (P7) mit einer Anode, die mit dem einen Ende des ersten Steuertransistors (Q7) verbunden ist, und einer Kathode, die mit dem anderen Ende des ersten Steuertransistors (Q7) verbunden ist;
einen zweiten Steuertransistor (Q8), der ein Ende mit dem anderen Ende der Batteriesicherung (FB) verbunden und das andere mit dem einen Ende des Hauptschalters (SW1) verbunden aufweist;
eine zweite parasitäre Steuerdiode (P8) mit einer Anode, die mit dem einen Ende des zweiten Steuertransistors (Q8) verbunden ist, und einer Kathode, die mit dem anderen Ende des zweiten Steuertransistors (Q8) verbunden ist;
wobei die Steuerschaltung (CON) ferner zum Steuern des ersten und des zweiten Steuertransistors (Q7, Q8) ausgelegt ist.

2. Stromversorgungssystem für Fahrzeuge nach Anspruch 1, wobei die Steuerschaltung (CON) ausgelegt ist zum:
Bestimmen, ob der Hauptschalter (SW1) eingeschaltet ist; Ausschalten des ersten und des zweiten Steuertransistors (Q7, Q8), falls bestimmt wird, dass der Hauptschalter (SW1) eingeschaltet ist;
Bestimmen, ob der Anlassschalter (SW2) eingeschaltet ist, nach dem Ausschalten des ersten und des zweiten Steuertransistors (Q7, Q8);
Einschalten der Relaisschaltung (RY1), falls der Anlassschalter (SW2) eingeschaltet ist;
Steuern der dreiphasigen Brückenschaltung (10) zum Durchführen von Motorantrieb für den Motor (M) nach dem Einschalten der Relaisschaltung (RY1);
Bestimmen, ob die mit dem Motor (M) verbundene Kraftmaschine gestartet wurde, nach dem Durchführen von Motorantrieb für den Motor (M);
Stoppen des von der dreiphasigen Brückenschaltung (10) durchgeführten Motorantriebs, falls bestimmt wird, dass die Kraftmaschine gestartet wurde;
Steuern der dreiphasigen Brückenschaltung (10) zum Durchführen von Phasensteuerung für den vom Motor (M) zugeführten AC-Strom nach dem Stoppen des Motorantriebs und Ausgeben von DC-Strom von zwischen dem einen Ende und dem anderen Ende der dreiphasigen Brückenschaltung (10);
Bestimmen, ob eine Ladespannung an der Batterie (B) in einem ersten Zustand, in dem die Kraftmaschine angetrieben wird und Phasensteuerung in der dreiphasigen Brückenschaltung (10) durchgeführt wird, eine voreingestellte Zielspannung oder höher ist; und
Ausschalten der Relaisschaltung (RY1), falls die Ladespannung an der Batterie (B) die voreingestellte Zielspannung oder höher ist, Steuern der dreiphasigen Brückenschaltung (10) zum Durchführen von Phasensteuerung für den vom Motor (M) zugeführten AC-Strom und Ausgeben von DC-Strom von zwischen dem einen Ende und dem anderen Ende der dreiphasigen Brückenschaltung (10) und ferner Einschalten des ersten und des zweiten Transistors (Q7, Q8).

3. Stromversorgungssystem für Fahrzeuge nach Anspruch 2, wobei, falls die Ladespannung an der Batterie (B) niedriger als die Zielspannung im ersten Zustand ist, die Steuerschaltung (CON) die dreiphasige Brückenschaltung (10) zum Durchführen von Phasensteuerung für den vom Motor (M) zugeführten AC-Strom und Ausgeben von DC-Strom von zwischen dem einen Ende und dem anderen Ende der dreiphasigen Brückenschaltung (10) steuert und gleichzeitig die Relaisschaltung (RY1) eingeschaltet und den ersten und den zweiten Transistor (Q7, Q8) ausgeschaltet lässt.

4. Stromversorgungssystem (100) für Fahrzeuge nach Anspruch 1, ferner umfassend eine Lastsicherung (Fr)m die zwischen den Ausgangsanschluss (TOUT) und einen Lastanschluss (TR) geschaltet ist, mit dem eine Last verbunden ist.

5. Stromversorgungssystem (100) für Fahrzeuge nach Anspruch 2, wobei die Steuerschaltung (CON) dazu ausgelegt ist:
eine Drehzahl des Motors (M) detektieren zu können,
zu bestimmen, dass die mit dem Motor (M) verbundene Kraftmaschine gestartet wurde, falls die Drehzahl des Motors (M) eine erste Einstelldrehzahl oder höher ist, und
andererseits zu bestimmen, dass die Kraftmaschine im Begriff ist, zu starten, falls eine Drehzahl des Motors (M) niedriger als die erste Einstelldrehzahl ist.

6. Stromversorgungssystem (100) für Fahrzeuge nach Anspruch 2, wobei die Steuerschaltung (CON) Spannung an einem Ende des Glättungskondensators (C) detektiert und Ladespannung an der Batterie (B) basierend auf der detektierten Spannung erfasst.

7. Stromversorgungssystem (100) für Fahrzeuge nach Anspruch 2, wobei
das eine Ende des Anlassschalters (SW2) mit der positiven Elektrode der Batterie (B) verbunden ist und
die Steuerschaltung (CON) dazu ausgelegt ist:
zu bestimmen, dass der Anlassschalter (SW2) eingeschaltet ist, falls ein Signal, das der Spannung an der positiven Elektrode der Batterie (B) entspricht, vom anderen Ende des Anlassschalters (SW2) empfangen wird, wenn der Anlassschalter (SW2) eingeschaltet wird; und
andererseits zu bestimmen, dass der Anlassschalter (SW2) ausgeschaltet ist, falls kein Signal, das der Spannung an der positiven Elektrode der Batterie (B) entspricht, vom anderen Ende des Anlassschalters (SW2) empfangen wird, wenn der Anlassschalter (SW2) ausgeschaltet wird.

8. Stromversorgungssystem (100) für Fahrzeuge nach Anspruch 2, wobei die Steuerschaltung (CON) dazu ausgelegt ist:
zu bestimmen, dass der Hauptschalter (SW1) eingeschaltet ist, wenn Strom vom anderen Ende des Hauptschalters (SW1) zugeführt wird; und
andererseits zu bestimmen, dass der Hauptschalter (SW1) ausgeschaltet ist, wenn kein Strom vom anderen Ende des Hauptschalters (SW1) zugeführt wird.

9. Stromversorgungssystem (100) für Fahrzeuge nach Anspruch 1, wobei die dreiphasige Brückenschaltung (10) umfasst:
einen ersten MOS-Transistor (Q1), der einen Drain, der mit dem einen Ende der dreiphasigen Brückenschaltung (10) verbunden ist, und eine Source aufweist, die mit einem Ende einer U-Phasen-Spule (UL) des Motors (M) verbunden ist, und eine Gatespannung aufweist, die von der Steuerschaltung (CON) gesteuert wird;
eine erste Diode (P1) mit einer Kathode, die mit dem Drain des ersten MOS-Transistors (Q1) verbunden ist, und einer Anode, die mit der Source des ersten MOS-Transistors (Q1) verbunden ist;
einen zweiten MOS-Transistor (Q2), der einen Drain, der mit dem einen Ende der dreiphasigen Brückenschaltung (10) verbunden ist, und eine Source aufweist, die mit einem Ende einer V-Phasen-Spule (VL) des Motors (M) verbunden ist, und eine Gatespannung aufweist, die von der Steuerschaltung (CON) gesteuert wird;
eine zweite Diode (P2) mit einer Kathode, die mit dem Drain des zweiten MOS-Transistors verbunden ist, und einer Anode, die mit der Source des zweiten MOS-Transistors (Q2) verbunden ist;
einen dritten MOS-Transistor (Q3), der einen Drain, der mit dem einen Ende der dreiphasigen Brückenschaltung (10) verbunden ist, und eine Source aufweist, die mit einem Ende einer W-Phasen-Spule (WL) des Motors (M) verbunden ist, und eine Gatespannung aufweist, die von der Steuerschaltung (CON) gesteuert wird;
eine dritte Diode (P3) mit einer Kathode, die mit dem Drain des dritten MOS-Transistors (Q3) verbunden ist, und einer Anode, die mit der Source des dritten MOS-Transistors (Q3) verbunden ist;
einen vierten MOS-Transistor (Q4), der einen Drain, der mit dem einen Ende der U-Phasen-Spule (UL) des Motors (M) verbunden ist, und eine Source aufweist, die mit dem anderen Ende der dreiphasigen Brückenschaltung (10) verbunden ist, und eine Gatespannung aufweist, die von der Steuerschaltung (CON) gesteuert wird;
eine vierte Diode (P4) mit einer Kathode, die mit dem Drain des vierten MOS-Transistors (Q4) verbunden ist, und einer Anode, die mit der Source des vierten MOS-Transistors (Q4) verbunden ist;
einen fünften MOS-Transistor (Q5), der einen Drain, der mit dem einen Ende der V-Phasen-Spule (VL) des Motors (M) verbunden ist, und eine Source aufweist, die mit dem anderen Ende der dreiphasigen Brückenschaltung (10) verbunden ist, und eine Gatespannung aufweist, die von der Steuerschaltung (CON) gesteuert wird;
eine fünfte Diode (P5) mit einer Kathode, die mit dem Drain des fünften MOS-Transistors (Q5) verbunden ist, und einer Anode, die mit der Source des fünften MOS-Transistors (Q5) verbunden ist;
einen sechsten MOS-Transistor (Q6), der einen Drain, der mit dem einen Ende der W-Phasen-Spule (WL) des Motors (M) verbunden ist, und eine Source aufweist, die mit dem anderen Ende der dreiphasigen Brückenschaltung (10) verbunden ist, und eine Gatespannung aufweist, die von der Steuerschaltung (CON) gesteuert wird;
eine sechste Diode (P6) mit einer Kathode, die mit dem Drain des sechsten MOS-Transistors (Q6) verbunden ist, und einer Anode, die mit der Source des sechsten MOS-Transistors (Q6) verbunden ist.

10. Stromversorgungssystem für Fahrzeuge nach Anspruch 9, wobei, wenn der Hauptschalter (SW1) eingeschaltet wird und der Motor (M) durch Kicken gedreht wird, Spannung, die in der ersten bis sechsten Diode (P1, P2, P3, P4, P5, P6) der dreiphasigen Brückenschaltung (10) gleichgerichtet wird, über die erste parasitäre Steuerdiode (P7) und den Hauptschalter (SW1), der eingeschaltet ist, der Steuerschaltung (CON) zugeführt wird.

11. Stromversorgungssystem für Fahrzeuge nach Anspruch 1, wobei der Motor (M), wenn er dazu ausgelegt ist, als Anlassermotor zu fungieren, der eine Stromquelle zum Starten der Kraftmaschine ist, auch dazu ausgelegt ist, als Stromerzeuger zu fungieren, der Strom aus Strom der Kraftmaschine nach dem Start der Kraftmaschine erzeugt.

12. Steuerverfahren für ein Stromversorgungssystem (100) nach Anspruch 1, umfassend die folgenden Schritte:
Bestimmen, ob der Hauptschalter (SW1) eingeschaltet ist (Schritt S1);
Ausschalten des ersten und des zweiten Steuertransistors (Q7, Q8), falls bestimmt wird, dass der Hauptschalter (SW1) eingeschaltet ist (Schritt S2);
Bestimmen, ob der Anlassschalter (SW2) eingeschaltet ist, nach dem Ausschalten des ersten und des zweiten Steuertransistors (Q7, Q8) (Schritt S3);
Einschalten der Relaisschaltung (RY1), falls der Anlassschalter (SW2) eingeschaltet ist (Schritt S4);
Steuern der dreiphasigen Brückenschaltung (10) zum Durchführen von Motorantrieb für den Motor (M) nach dem Einschalten der Relaisschaltung (RY1) (Schritt S5);
Bestimmen, ob die mit dem Motor (M) verbundene Kraftmaschine gestartet wurde, nach dem Durchführen von Motorantrieb für den Motor (M) (Schritt S6);
Stoppen des von der dreiphasigen Brückenschaltung (10) durchgeführten Motorantriebs, falls bestimmt wird, dass die Kraftmaschine gestartet wurde (Schritt S7);
Steuern der dreiphasigen Brückenschaltung (10) zum Durchführen von Phasensteuerung für den vom Motor (M) zugeführten AC-Strom nach dem Stoppen des Motorantriebs und Ausgeben von DC-Strom von zwischen dem einen Ende und dem anderen Ende der dreiphasigen Brückenschaltung (10) (Schritt S8);
Bestimmen, ob eine Ladespannung an der Batterie (B) in einem ersten Zustand, in dem die Kraftmaschine angetrieben wird und Phasensteuerung in der dreiphasigen Brückenschaltung (10) durchgeführt wird, eine voreingestellte Zielspannung oder höher ist (Schritt S9); und
Ausschalten der Relaisschaltung (RY1), falls die Ladespannung an der Batterie (B) die voreingestellte Zielspannung oder höher ist, Steuern der dreiphasigen Brückenschaltung (10) zum Durchführen von Phasensteuerung für den vom Motor (M) zugeführten AC-Strom und Ausgeben von DC-Strom von zwischen dem einen Ende und dem anderen Ende der dreiphasigen Brückenschaltung (10) und ferner Einschalten des ersten und des zweiten Transistors (Q7, Q8) (Schritt S10),
wobei, falls die Ladespannung an der Batterie (B) niedriger als die Zielspannung im ersten Zustand ist, die Steuerschaltung (CON) die dreiphasige Brückenschaltung (10) zum Durchführen von Phasensteuerung für den vom Motor (M) zugeführten AC-Strom und Ausgeben von DC-Strom von zwischen dem einen Ende und dem anderen Ende der dreiphasigen Brückenschaltung (10) steuert und gleichzeitig die Relaisschaltung (RY1) eingeschaltet und den ersten und den zweiten Transistor (Q7, Q8) ausgeschaltet lässt (Schritt S11).

## Revendications

1. Système d'alimentation électrique automobile (100) comprenant :
un moteur électrique (M) connecté à un moteur d'un véhicule, le moteur pouvant être démarré avec le moteur électrique (M) soit en agissant en tant que démarreur soit en étant mis en rotation par un démarrage au pied ;
un commutateur principal (SW1) commandé pour être activé ou désactivé ;
un commutateur de démarreur (SW2) commandé pour être activé ou désactivé et utilisé pour démarrer le moteur ;
une batterie (B) ayant une électrode positive connectée à une extrémité du commutateur de démarreur (SW2) et une électrode négative connectée à un fil de masse (G) ;
un fusible de batterie (FB) ayant une extrémité connectée à l'électrode positive de la batterie (B) ;
un circuit relais (RY1) configuré pour connecter électriquement un premier contact (C1) connecté à une borne de sortie (TOUT) à un deuxième contact (C2) connecté à l'électrode positive de la batterie (B) lorsqu'il est activé, et configuré pour interrompre une connexion électrique entre le premier contact (C1) et le deuxième contact (C2) lorsqu'il est désactivé ;
un condensateur de lissage (C) ayant une extrémité connectée au premier contact (C1) et l'autre extrémité connectée à l'électrode négative de la batterie (B) ;
un circuit en pont triphasé (10) ayant une extrémité connectée au premier contact (C1) et l'autre extrémité connectée au fil de masse (G), et configuré pour réaliser un entraînement de moteur électrique pour le moteur électrique (M) en réalisant une commande de phase pour une puissance CA fournie par le moteur électrique (M) et en délivrant une puissance CC depuis entre ladite extrémité et l'autre extrémité ou en convertissant une puissance CC de la batterie (B) en puissance CA et en fournissant la puissance CA au moteur électrique (M) ;
un circuit de commande (CON) connecté à l'autre extrémité du commutateur principal (SW1), à l'autre extrémité du commutateur de démarreur (SW2) et au fil de masse, alimenté par de la puissance fournie à l'autre extrémité du commutateur principal (SW1), et configuré pour commander le circuit en pont triphasé (10), et le circuit relais (RY1), **caractérisé en ce qu'**il comprend en outre :
un premier transistor de commande (Q7) ayant une extrémité connectée à l'autre extrémité du circuit en pont triphasé (10) et l'autre extrémité connectée à une extrémité du commutateur principal (SW1) ;
une première diode parasite de commande (P7) ayant une anode connectée à ladite extrémité du premier transistor de commande (Q7) et une cathode connectée à l'autre extrémité du premier transistor de commande (Q7) ;
un deuxième transistor de commande (Q8) ayant une extrémité connectée à l'autre extrémité du fusible de batterie (FB) et l'autre extrémité connectée à ladite extrémité du commutateur principal (SW1) ; et
une deuxième diode parasite de commande (P8) ayant une anode connectée à ladite extrémité du deuxième transistor de commande (Q8) et une cathode connectée à l'autre extrémité du deuxième transistor de commande (Q8) ;
le circuit de commande (CON) étant en outre configuré pour commander les premier et deuxième transistors de commande (Q7, Q8).

2. Système d'alimentation électrique automobile selon la revendication 1, le circuit de commande (CON) étant configuré pour :
déterminer si le commutateur principal (SW1) est activé ou non ;
désactiver les premier et deuxième transistors de commande (Q7, Q8) en cas de détermination que le commutateur principal (SW1) est activé ;
déterminer si le commutateur de démarreur (SW2) est activé ou non après la désactivation des premier et deuxième transistors de commande (Q7, Q8) ;
activer le circuit relais (RY1) dans le cas où le commutateur de démarreur (SW2) est activé ;
commander le circuit en pont triphasé (10) pour réaliser un entraînement de moteur électrique pour le moteur électrique (M) après l'activation du circuit relais (RY1) ;
déterminer si le moteur connecté au moteur électrique (M) a été démarré ou non après la réalisation de l'entraînement de moteur électrique pour le moteur électrique (M) ;
arrêter l'entraînement de moteur électrique réalisé par le circuit en pont triphasé (10) en cas de détermination que le moteur a été démarré ;
commander le circuit en pont triphasé (10) pour réaliser une commande de phase pour une puissance CA fournie par le moteur électrique (M) après l'arrêt de l'entraînement de moteur électrique, et délivrer une puissance CC depuis entre ladite extrémité et l'autre extrémité du circuit en pont triphasé (10) ;
déterminer si une tension de charge au niveau de la batterie (B) est ou non une tension cible prédéfinie ou plus dans un premier état dans lequel le moteur est entraîné et une commande de phase est réalisée dans le circuit en pont triphasé (10) ; et
désactiver le circuit relais (RY1) dans le cas où la tension de charge au niveau de la batterie (B) est la tension cible prédéfinie ou plus, commander le circuit en pont triphasé (10) pour réaliser une commande de phase pour une puissance CA fournie par le moteur électrique (M), et délivrer une puissance CC depuis entre ladite extrémité et l'autre extrémité du circuit en pont triphasé (10), et en outre activer les premier et deuxième transistors de commande (Q7, Q8).

3. Système d'alimentation électrique automobile selon la revendication 2, dans le cas où la tension de charge au niveau de la batterie (B) est inférieure à la tension cible dans le premier état, le circuit de commande (CON) commandant le circuit en pont triphasé (10) pour réaliser une commande de phase pour une puissance CA fournie par le moteur électrique (M), et délivrant une puissance CC depuis entre ladite extrémité et l'autre extrémité du circuit en pont triphasé (10) tout en gardant le circuit relais (RY1) activé et les premier et deuxième transistors de commande (Q7, Q8) désactivés.

4. Système d'alimentation électrique automobile (100) selon la revendication 1, comprenant en outre un fusible de charge (FR) connecté entre la borne de sortie (TOUT) et une borne de charge (TR) à laquelle une charge est connectée.

5. Système d'alimentation électrique automobile (100) selon la revendication 2, le circuit de commande (CON) étant configuré pour :
être capable de détecter une vitesse de rotation du moteur électrique (M),
déterminer que le moteur connecté au moteur électrique (M) a été démarré dans le cas où une vitesse de rotation du moteur électrique (M) est une première vitesse de rotation de réglage ou plus, et
d'autre part, déterminer que le moteur est en cours de démarrage dans le cas où une vitesse de rotation du moteur électrique (M) est inférieure à la première vitesse de rotation de réglage.

6. Système d'alimentation électrique automobile (100) selon la revendication 2, le circuit de commande (CON) détectant une tension au niveau d'une extrémité du condensateur de lissage (C) et acquérant une tension de charge au niveau de la batterie (B) sur la base de la tension détectée.

7. Système d'alimentation électrique automobile (100) selon la revendication 2,
l'autre extrémité du commutateur de démarreur (SW2) étant connectée à l'électrode positive de la batterie (B), et le circuit de commande (CON) étant configuré pour :
déterminer que le commutateur de démarreur (SW2) est activé dans le cas où un signal correspondant à une tension au niveau de l'électrode positive de la batterie (B) est reçu en provenance de l'autre extrémité du commutateur de démarreur (SW2) lorsque le commutateur de démarreur (SW2) est activé ; et
d'autre part, déterminer que le commutateur de démarreur (SW2) est désactivé dans le cas où un signal correspondant à une tension au niveau de l'électrode positive de la batterie (B) est reçu en provenance de l'autre extrémité du commutateur de démarreur (SW2) lorsque le commutateur de démarreur (SW2) est désactivé.

8. Système d'alimentation électrique automobile (100) selon la revendication 2, le circuit de commande (CON) étant configuré pour :
déterminer que le commutateur principal (SW1) est activé lorsque de la puissance est fournie en provenance de l'autre extrémité du commutateur principal (SW1), et
d'autre part, déterminer que le commutateur principal (SW1) est désactivé lorsque de la puissance n'est pas fournie en provenance de l'autre extrémité du commutateur principal (SW1).

9. Système d'alimentation électrique automobile (100) selon la revendication 1, le circuit en pont triphasé (10) comportant :
un premier transistor MOS (Q1) ayant un drain connecté à ladite extrémité du circuit en pont triphasé (10) et une source connectée à une extrémité d'une bobine de phase U (UL) du moteur électrique (M), et ayant une tension de grille commandée par le circuit de commande (CON) ;
une première diode (P1) ayant une cathode connectée au drain du premier transistor MOS (Q1) et une anode connectée à la source du premier transistor MOS (Q1) ;
un deuxième transistor MOS (Q2) ayant un drain connecté à ladite extrémité du circuit en pont triphasé (10) et une source connectée à une extrémité d'une bobine de phase V (VL) du moteur électrique (M), et ayant une tension de grille commandée par le circuit de commande (CON) ;
une deuxième diode (P2) ayant une cathode connectée au drain du deuxième transistor MOS et une anode connectée à la source du deuxième transistor MOS (Q2) ;
un troisième transistor MOS (Q3) ayant un drain connecté à ladite extrémité du circuit en pont triphasé (10) et une source connectée à une extrémité d'une bobine de phase W (WL) du moteur électrique (M), et ayant une tension de grille commandée par le circuit de commande (CON) ;
une troisième diode (P3) ayant une cathode connectée au drain du troisième transistor MOS (Q3) et une anode connectée à la source du troisième transistor MOS (Q3) ;
un quatrième transistor MOS (Q4) ayant un drain connecté à ladite extrémité de la bobine de phase U (UL) du moteur électrique (M) et une source connectée à l'autre extrémité du circuit en pont triphasé (10), et ayant une tension de grille commandée par le circuit de commande (CON) ;
une quatrième diode (P4) ayant une cathode connectée au drain du quatrième transistor MOS (Q4) et une anode connectée à la source du quatrième transistor MOS (Q4) ;
un cinquième transistor MOS (Q5) ayant un drain connecté à ladite extrémité de la bobine de phase V (VL) du moteur électrique (M) et une source connectée à l'autre extrémité du circuit en pont triphasé (10), et ayant une tension de grille commandée par le circuit de commande (CON) ;
une cinquième diode (P5) ayant une cathode connectée au drain du cinquième transistor MOS (Q5) et une anode connectée à la source du cinquième transistor MOS (Q5) ;
un sixième transistor MOS (Q6) ayant un drain connecté à ladite extrémité de la bobine de phase W (WL) du moteur électrique (M) et une source connectée à l'autre extrémité du circuit en pont triphasé (10), et ayant une tension de grille commandée par le circuit de commande (CON) ; et
une sixième diode (P6) ayant une cathode connectée au drain du sixième transistor MOS (Q6) et une anode connectée à la source du sixième transistor MOS (Q6).

10. Système d'alimentation électrique automobile selon la revendication 9, lorsque le commutateur principal (SW1) est activé et que le moteur électrique (M) est mis en rotation par coup de pied, une tension redressée dans les première à sixième diodes (P1, P2, P3, P4, P5, P6) du circuit en pont triphasé (10) étant fournie au circuit de commande (CON) via la première diode parasite de commande (P7) et le commutateur principal (SW1) qui est activé.

11. Système d'alimentation électrique automobile selon la revendication 1, lorsque le moteur électrique (M) est configuré pour fonctionner en tant que moteur à démarreur qui est une source de puissance pour démarrer le moteur et également est configuré pour fonctionner en tant que générateur de puissance qui génère de la puissance à partir de la puissance du moteur après le démarrage du moteur.

12. Procédé de commande pour un système d'alimentation électrique automobile (100) selon la revendication 1, comprenant les étapes suivantes :
la détermination si le commutateur principal (SW1) est activé ou non (étape S1) ;
la désactivation des premier et deuxième transistors de commande (Q7, Q8) en cas de détermination que le commutateur principal (SW1) est activé (étape S2) ;
la détermination si le commutateur de démarreur (SW2) est activé ou non après la désactivation des premier et deuxième transistors de commande (Q7, Q8) (étape S3) ;
l'activation du circuit relais (RY1) dans le cas où le commutateur de démarreur (SW2) est activé (étape S4) ;
la commande du circuit en pont triphasé (10) pour réaliser un entraînement de moteur électrique pour le moteur électrique (M) après l'activation du circuit relais (RY1) (étape S5) ;
la détermination si le moteur connecté au moteur électrique (M) a été démarré ou non après la réalisation de l'entraînement de moteur électrique pour le moteur électrique (M) (étape S6) ;
l'arrêt de l'entraînement de moteur électrique réalisé par le circuit en pont triphasé (10) en cas de détermination que le moteur a été démarré (étape S7) ;
la commande du circuit en pont triphasé (10) pour réaliser une commande de phase pour une puissance CA fournie par le moteur électrique (M) après l'arrêt de l'entraînement de moteur électrique, et la fourniture d'une puissance CC depuis entre ladite extrémité et l'autre extrémité du circuit en pont triphasé (10) (étape S8) ;
la détermination si une tension de charge au niveau de la batterie (B) est ou non une tension cible prédéfinie ou plus dans un premier état dans lequel le moteur est entraîné et une commande de phase est réalisée dans le circuit en pont triphasé (10) (étape S9) ; et
la désactivation du circuit relais (RY1) dans le cas où la tension de charge au niveau de la batterie (B) est la tension cible prédéfinie ou plus, la commande du circuit en pont triphasé (10) pour réaliser une commande de phase pour une puissance CA fournie par le moteur électrique (M), et la fourniture d'une puissance CC depuis entre ladite extrémité et l'autre extrémité du circuit en pont triphasé (10), et en outre l'activation des premier et deuxième transistors de commande (Q7, Q8) (étape S10).
dans le cas où la tension de charge au niveau de la batterie (B) est inférieure à la tension cible dans le premier état, le circuit de commande (CON) commandant le circuit en pont triphasé (10) pour réaliser une commande de phase pour une puissance CA fournie par le moteur électrique (M), et délivrant une puissance CC depuis entre ladite extrémité et l'autre extrémité du circuit en pont triphasé (10) tout en gardant le circuit relais (RY1) activé et les premier et deuxième transistors de commande (Q7, Q8) désactivés (étape S11).
